# EUROPÄISCHE PATENTSCHRIFT

(11) **EP 2 925 999 B1**
(45) Veröffentlichungstag und Bekanntmachung des Hinweises auf die Patenterteilung: **22.08.2018**
(21) Anmeldenummer: 13794875.8
(22) Anmeldetag: 19.11.2013
(51) Int. Cl.: F03B 13/26, H01R 13/523

(54) **MODULARES STRÖMUNGSKRAFTWERK MIT EINER UNTERWASSER-STECKVORRICHTUNG UND MONTAGEVERFAHREN**
MODULAR HYDROELECTRIC POWER PLANT WITH AN UNDERWATER PLUG DEVICE, AND ASSEMBLY METHOD
CENTRALE HYDROLIENNE MODULAIRE AVEC DISPOSITIF DE RACCORDEMENT EMBROCHABLE IMMERGÉ ET PROCÉDÉ DE MONTAGE

(30) Priorität: 30.11.2012 DE 102012023392
(43) Veröffentlichungstag der Anmeldung: 07.10.2015
(73) Patentinhaber: Voith Patent GmbH, 89522 Heidenheim (DE)
(72) Erfinder: MÜLLER, Christian, 89518 Heidenheim (DE)
(74) Vertreter: Dr. Weitzel & Partner
(86) Internationale Anmeldenummer: PCT/EP2013/074140
(87) Internationale Veröffentlichungsnummer: WO 2014/082893

(56) Entgegenhaltungen:
- WO-A1-2011/050403
- WO-A1-2013/092686
- FR-A1- 2 667 126
- US-A1- 2004 154 804
- US-A1- 2012 175 124

## Beschreibung

Die Erfindung betrifft ein modulares Strömungskraftwerk mit einer Unterwasser-Steckvorrichtung gemäß der oberbegrifflichen Merkmale von Anspruch 1 sowie ein Montageverfahren für das modulare Strömungskraftwerk.

Modulare Strömungskraftwerke dienen Energiegewinnung aus einer Meeresströmung, insbesondere einer Gezeitenströmung. Dabei werden für einen Offshore-Standort Strömungskraftwerke ohne eine Dammstruktur bevorzugt, deren Wasserturbinen entweder frei umströmt sind oder sich in einem Mantelgehäuse befinden, um die Anströmungsgeschwindigkeit zu erhöhen. Im letzteren Fall wird das Mantelgehäuse außenseitig frei umströmt und weist im Inneren einen Venturi-Strömungskanal auf. Eine übliche Ausführungsform gattungsgemäßer Anlagen sieht eine propellerförmige Horizontalachsturbine vor, die an einer Maschinengondel umläuft. Innerhalb der Maschinengondel befindet sich ein elektrischer Generator, der in Triebverbindung zur Wasserturbine steht.

Eine wirtschaftliche Energiegewinnung aus einer langsamen Strömung setzt großbauende Wasserturbinen voraus, die insbesondere für einen Meeresstandort schwierig zu errichten sind. Daher wird für modulare Strömungskraftwerke zunächst am Installationsort eine Stützstruktur erstellt. Diese kann in Form eines gebohrten Fundaments und einem in das Bohrloch eingesetzten Monopiles oder als mehrteiliges Tragwerk gewählt werden. Soweit sich die Stützstruktur auf dem Meeresgrund abstützt, sind auch Schwerkraftfundamente denkbar. Als Alternative stellt die Stützstruktur eine schwimmfähige oder auf einer bestimmten Wassertiefe tauchende Einheit dar. Für das modulare Konzept wird in einem nachfolgenden Montageschritt auf die Stützstruktur die Maschinengondel mit der Wasserturbine abgesetzt. Typischerweise liegt an der Stützstruktur eine Kopplungsvorrichtung zum Ankoppeln der Maschinengondel vor, in die ein gondelseitiger Turmadapter formschlüssig und selbstzentrierend eingreift.

Für modulare Strömungskraftwerke muss nach dem Absetzen der Maschinengondel auf der Stützstruktur eine Leistungs- und Versorgungsverbindung zwischen der Maschinengondel und der Stützstruktur geschaffen werden. Dabei ist zur Anlagenanbindung eine elektrische Leistungsverbindung zu einem Seekabel herzustellen, das die von der Anlage erzeugte Leistung zum nächstgelegenen Umspannpunkt leitet. Neben der Leistungsübertragung besteht die weitere Notwendigkeit, elektrische Signalverbindungen für sensorische Signale zur Anlagensteuerung zu den innerhalb der Maschinengondel angeordneten Aggregaten, insbesondere dem elektrischen Generator und Vorrichtungen zur Anlagenführung, beispielsweise einen Pitchverstellmechanismus, zu schaffen. Neben elektrischen Leitungsanbindungen kann es ferner erforderlich sein, optische Signale oder Betriebsstoffe, wie ein Hydraulikmedium oder Schmierstoffe, zur Maschinengondel zu leiten.

Zur Herstellung der genannten Verbindungen können Unterwasser-Steckvorrichtungen verwendet werden, für die Stecker und zugeordnete Steckerbuchsen auf Steckerplatten zusammengefasst sind, die typischerweise zusätzlich Zentrierungselemente aufweisen, um den Steckvorgang zu erleichtern und diesen mittels eines Tauchroboters (ROV) ausführen zu können. Zur Vereinfachung der Montage werden Unterwasser-Steckvorrichtungen für modulare Strömungskraftwerke so in eine erste mit einer Maschinengondel verbundene Baugruppe und in eine zweite, mit der Stützstruktur verbundene Baugruppe aufgeteilt, dass beim Absetzen der Maschinengondel auf die Stützstruktur die Kopplung der Unterwasser-Steckvorrichtung vollzogen werden kann. Hierzu wird auf die WO 2011 050403 A1 verwiesen, die eine in einen Turmadapter der Maschinengondel und eine Kopplungsvorrichtung an der Stützstruktur aufgenommene Unterwasser-Steckvorrichtung offenbart. Dabei sind zwei drehbare, tellerförmige Steckerplatten vorgesehen, die über den rotativen Freiheitsgrad um die Hochachse der Anlage hinaus keinen weiteren Lagenausgleich zulassen. Dies erschwert das Absetzen der Maschinengondel auf die Stützstruktur. Des Weiteren besteht keine Möglichkeit, Laststöße abzufedern, die beim Betrieb der Anlage zu elastischen Verformungen im Bereich des gondelseitigen Turmadapters und der Kopplungsvorrichtung an der Stützstruktur führen.

Für Unterwasser-Steckvorrichtungen von Bohrlochanschlüssen, die mittels eines Tauchroboters ge- und entkoppelt werden, sind Lagekorrekturkomponenten bekannt. So beschreibt die US 2004 0154804 A1 eine Lagerung für Steckerplatten auf Federstiften. Der damit erzielbare Lageausgleich ist nicht für alle Freiheitsgrade im gleichen Umfang gegeben. Dies gilt insbesondere für die Bewegungsmöglichkeit um die Gierachse. Ein weiterer Lageausgleichsmechanismus für eine Unterwasser-Steckvorrichtung wird durch die US 2012 0175124 A1 offenbart. Beschrieben wird eine bewegliche Lagerung für eine untere Steckerplatte auf einem gekreuzten Schienensystem, sodass zwei translatorische Freiheitsgrade resultieren. Zusätzlich liegt eine zentrale Abstützung der Steckerplatte an einem Kugelgelenk vor, das eine Bewegungsmöglichkeit bezüglich der drei rotatorischen Freiheitsgrade erlaubt. Bei der Übertragung der aus der US 2012 0175124 A1 bekannten Konstruktion für eine Unterwasser-Steckvorrichtung eines modularen Strömungskraftwerks ergibt sich die Schwierigkeit, dass kein unabhängig von der Kopplungsbewegung vorliegender translatorischer Freiheitsgrad in die Einsteckrichtung vorliegt. Des Weiteren führt das zentral angeordnete Kugelgelenk dazu, dass vor dem Zusammenführen der Zentrierungselemente die Ausgangslage der unteren Steckerplatte undefiniert ist. Dies erschwert das Absetzen der Maschinengondel auf der Stützstruktur, da das Anlagengewicht, der Anlagenstandort unter Wasser und die meist ständig herrschende Anströmung eine vollständige Bewegungskontrolle des Absetzvorgangs Maschinengondel nicht erlaubt.

Der Erfindung liegt die Aufgabe zugrunde, ein modulares Strömungskraftwerk mit einer Unterwasser-Steckvorrichtung anzugeben, die so ausgeführt ist, dass ein Lageausgleich zwischen einer ersten Steckerplatte und einer zweiten Steckerplatte mit einem weiten Bewegungsspielraum für alle drei Freiheitsgrade der Translation und alle drei Freiheitsgrade der Rotation gegeben ist. Dabei darf die Unterwasser-Steckvorrichtung das Aufsetzen der Maschinengondel auf die Stützstruktur nicht behindern. Ferner sollte die Unterwasser-Steckvorrichtung beim Anlagenbetrieb Ausgleichsbewegungen im Falle elastischer Verformung im Übergang von der Maschinengondel zur Stützstruktur ausführen, ohne hohe Kräfte auf die Stecker und die daran anschließenden Leitungsverbindungen auszuüben. Für eine Weitergestaltung soll eine unabhängig von der Bewegungsführung für die Maschinengondel ausführbare Kopplung und Entkopplung der Stecker von den zugeordneten Steckerbuchsen der Unterwasser-Steckvorrichtung möglich sein. Zusätzlich ist ein Montageverfahren für eine Unterwasser-Steckvorrichtung an einem modularen Strömungskraftwerk anzugeben.

Die voranstehend genannte Aufgabe wird durch die Merkmale der unabhängigen Ansprüche gelöst. Bevorzugte Ausführungen ergeben sich aus den Unteransprüchen.

Die Erfinder haben erkannt, dass eine Unterwasser-Steckvorrichtung für ein modulares Strömungskraftwerk mit einer ersten mit der Maschinengondel verbundenen Baugruppe und einer zweiten mit der Stützstruktur verbundenen Baugruppe für den oberen Teil, das heißt der ersten Baugruppe, einen Lageausgleichmechanismus umfassen muss, der bezüglich aller sechs Eulerwinkel beweglich ist. Diese Beweglichkeit resultiert daraus, dass die erste Steckerplatte für die erste Baugruppe über mehrere Linearverstellelemente hängend an einem der ersten Baugruppe zugeordneten Tragelement aufgehängt ist und die Befestigung der Linearverstellelemente an der ersten Steckerplatte und am Tragelement jeweils so ausgebildet sind, dass die erste Steckerplatte für die drei Freiheitsgrade der Translationen und die drei Freiheitsgrade der Rotation in vorgegebenen Grenzen beweglich ist. Bevorzugt sind diese Befestigungen derart angelegt, dass diese die Freiheitsgrade eines Kugelgelenks aufweisen. Neben eigentlichen Kugelgelenken kommen als Befestigungen auch vereinfachte konstruktive Ausführungen wie Befestigungsaugen mit Spiel oder elastischen Einlagen bzw. Halterungen mit Übermaß in Frage. Vorteilhafterweise umfassen die Linearverstellelemente elastische Rückstellelemente. Besonders bevorzugt werden als Linearverstellelemente zur Aufhängung der ersten Steckerplatte Federstangen verwendet. Diese können unterschiedlich gestaltet sein, etwa als Kolbenstange mit außenliegenden Federn oder in Form teleskopischer Führungen mit innenliegenden elastischen Elementen.

Des Weiteren erfolgt die Aufhängung bevorzugt an mindestens drei Linearverstellelementen, um die erste Steckerplatte vor dem Eingriff der Zentrierungselemente stabil führen zu können. Ferner liegt für die erste Baugruppe an der ersten Steckerplatte mindestens ein Zentrierungselement, vorzugsweise ein Zentrierstift, vor, das komplementär zu einem Zentrierungsgegenstück auf der zweiten Steckerplatte der zweiten Baugruppe ausgebildet ist. Dabei kann das Zentrierungsgegenstück als trichterförmig zulaufende Buchse ausgebildet sein, sodass konische Gleitflächen beim Zusammenführen des Zentrierungselements und des Zentrierungsgegenstücks die erste Steckerplatte und die zweite Steckerplatte bei einer Annäherung in Einkopplungsrichtung relativ zueinander zentrieren, bis Stecker und zugeordnete Steckerbuchsen auf den Steckerplatten in fluchtender Stellung zueinander stehen. Bei einer weiteren Bewegung in Einkopplungsrichtung nach dem Erreichen der fluchtenden Stellung oder bereits im Verlauf der Zentrierung wird die Wirkverbindung zwischen Stecker und Steckerbuchse hergestellt.

Für die Zentrierung wird der für alle sechs Freiheitsgrade gegebene Bewegungsumfang für die Lagekompensation der ersten Steckerplatte genutzt. Zusätzlich zur vollständigen Bewegungskompensation für die erste Steckerplatte der ersten Baugruppe kann optional eine weitere Bewegungskompensationsvorrichtung für die zweite Baugruppe vorliegen. Der Vorteil dieser Maßnahme ist eine redundante Lagekompensationsvorrichtung. Für eine bevorzugte Ausgestaltung wird für die zweite Baugruppe jedoch eine starr befestigte zweite Steckerplatte verwendet, sodass der mit der Stützstruktur verbundene Teil der Unterwasser-Steckvorrichtung möglichst einfach ausgebildet werden kann. Dieser Teil bleibt dauerhaft unter Wasser, sodass ein ausfallsicheres Design angestrebt wird. Alle für die Lagekompensation in sechs Freiheitsgraden notwendigen beweglichen Komponenten sind für die bevorzugt Ausführung in der ersten Baugruppe zusammengefasst, die mit der Maschinengondel und damit dem zur Ausführung einer Servicemaßnahme bergbaren Teil des modularen Strömungskraftwerks verbunden sind.

Für eine bidirektional anströmbare Wasserturbine, die einen Pitchverstellmechanismus an der Wasserturbine oder ein bidirektional anströmbares Profil und starr angelenkte Rotorblätter aufweist, kann die Maschinengondel drehstarr auf der Stützstruktur abgesetzt werden. Damit besteht die Möglichkeit, die Unterwasser-Steckvorrichtung außerhalb des Gehäuses der Maschinengondel und außerhalb der Wandung der Stützstruktur anzuordnen. In diesem Fall liegt die Unterwasser-Steckvorrichtung im Bereich der Umgebungsströmung, sodass eine robuste Ausführung mit mindestens drei Linearverstellelementen zur Aufhängung der ersten Steckerplatte am Tragelement der ersten Baugruppe bevorzugt wird. Für eine alternative Ausgestaltung wird die Unterwasser-Steckvorrichtung in der Kopplungsvorrichtung an der Stützstruktur und dem Gegenstück, dem Turmadapter, an der Maschinengondel untergebracht. In diesem Fall schützt die Wandung der Stützstruktur im montierten Zustand die Unterwasser-Steckvorrichtung, die dann vereinfacht mit mindestens zwei Linearverstellelementen zur hängenden Befestigung der ersten Steckerplatte ausgeführt wird.

Für eine bevorzugte Weitergestaltung der Erfindung wird die Zentrierung der ersten Steckerplatte relativ zur zweiten Steckerplatte unter Ausnutzung der in sechs Freiheitsgraden beweglichen Lagekompensation für die erste Steckerplatte lediglich zum Erzielen einer fluchtenden Stellung der Stecker und der jeweils zugeordneten Steckerbuchsen auf der ersten und zweiten Steckerplatte verwendet. Die Herstellung der Wirkverbindung zwischen Stecker und zugeordneter Steckerbuchse erfolgt nach einem weiteren Verfahrensschritt durch eine Fortführung der Bewegung der ersten Steckerplatte in Richtung der fluchtenden zweiten Steckerplatte.

Für die Weitergestaltung ist das Tragelement, an dem die Linearverstellelemente zur Aufhängung der ersten Steckerplatte beweglich befestigt sind, gegenüber einem relativ zu Maschinengondel ortsfesten Rahmen der ersten Baugruppe mit einem Aktuator verfahrbar. Für die Bewegungsführung dient ein Linearantrieb, der bevorzugt als Hydraulikzylinder ausgebildet ist. Bei dieser Ausführung erfolgt durch das Aufsetzen der Maschinengondel auf die Stützstruktur lediglich eine Grundorientierung der ersten Baugruppe gegenüber der zweiten Baugruppe der Unterwasser-Steckvorrichtung. Die endgültige Annäherung bis zur Zentrierung und fluchtenden Stellung der Stecker und der jeweils zugeordneten Steckerbuchsen bis zur Herstellung der Wirkverbindung erfolgt durch eine Stellbewegung des Linearantriebs. Dabei wird für den gesamten Bewegungsverlauf der Stellbewegung die Bewegungskompensation für alle sechs Freiheitsgrade für die erste Steckerplatte der ersten Baugruppe genutzt. Für eine bevorzugte Ausgestaltung weist der Linearantrieb eine integrierte Verriegelungseinrichtung auf, sodass nach Abschluss des Montageverfahrens die Relativlage zwischen der ersten Steckerplatte und der zweiten Steckerplatte fixiert werden kann.

Für eine alternative Ausführung sind die Linearverstellelemente zur Aufhängung der ersten Steckerplatte anstatt als passive, elastische vorgespannte Elemente in Form von Aktuatoren ausgebildet. Hierfür kommen Hydraulikzylinder oder Spindeltriebe in Betracht, die mittels Gelenken am Tragelement der ersten Baugruppe und der ersten Steckerplatte befestigt sind, sodass die erste Steckerplatte bezüglich aller sechs Freiheitsgrade aktiv bewegt wird. Für den Lageausgleich sind dann aber sensorische Komponenten und zugeordnete Steuergeräte notwendig.

Für eine weitere, besonders bevorzugte Weitergestaltung ist zumindest einem Stecker-Steckerbuchsenpaar ein separater Steckeraktuator auf einer der Steckerplatten zugeordnet, der ein separates Koppeln und Entkoppeln einzelner Steckverbindungen nach dem Erreichen der fluchtenden Stellung zwischen der ersten Steckerplatte und der zweiten Steckerplatte ermöglicht. Damit ist ein schnelles und sicheres individuelles Schalten einzelner Steckverbindungen möglich. Dies wird insbesondere für den Stecker des Leistungskabels genutzt, sodass beim Anlagenstillstand der elektrische Generator von der Seekabelverbindung einzeln getrennt werden kann. Bei der Nutzung eines permanenterregten Generators kann somit für Wartungsarbeiten die Spannungsfreiheit auf dem Seekabel sichergestellt werden, ohne dass der Anlagenstillstand garantiert werden muss.

Nachfolgend wird die Erfindung anhand von bevorzugten Ausführungsbeispielen und Figuren erläutert, die Folgendes darstellen:
- Figur 1: zeigt die Unterwasser-Steckvorrichtung eines erfindungsgemäßen modularen Strömungskraftwerks in Seitenansicht vor der Zentrierung.
- Figur 2: zeigt die Unterwasser-Steckvorrichtung aus Figur 1 nach der Zentrierung der ersten, relativ zur zweiten Steckerplatte.
- Figur 3: zeigt die Unterwasser-Steckvorrichtung von Figur 2 in Seitenansicht.
- Figur 4: zeigt eine Befestigung für Linearverstellelemente an einer Steckerplatte für eine erfindungsgemäße Unterwasser-Steckvorrichtung.
- Figur 5: zeigt eine Ausgestaltungsalternative für eine Befestigung des Linearverstellelements.
- Figur 6: zeigt ein weiteres Ausführungsbeispiel für eine erfindungsgemäße Unterwasser-Steckvorrichtung, die in eine Kopplungsvorrichtung eines modularen Strömungskraftwerks integriert ist, wobei die Stellung vor der Kopplung dargestellt ist.
- Figur 7: zeigt die Unterwasser-Steckvorrichtung von Figur 6 nach der Kopplung.
- Figur 8: zeigt ein modulares Strömungskraftwerk mit einer außenliegenden ersten und zweiten Baugruppe der Unterwasser-Steckvorrichtung.
- Figur 9: zeigt ein modulares Strömungskraftwerk mit einer Integration der ersten und zweiten Baugruppe in eine Kopplungsvorrichtung zum Aufsetzen einer Wasserturbine auf die Stützstruktur.

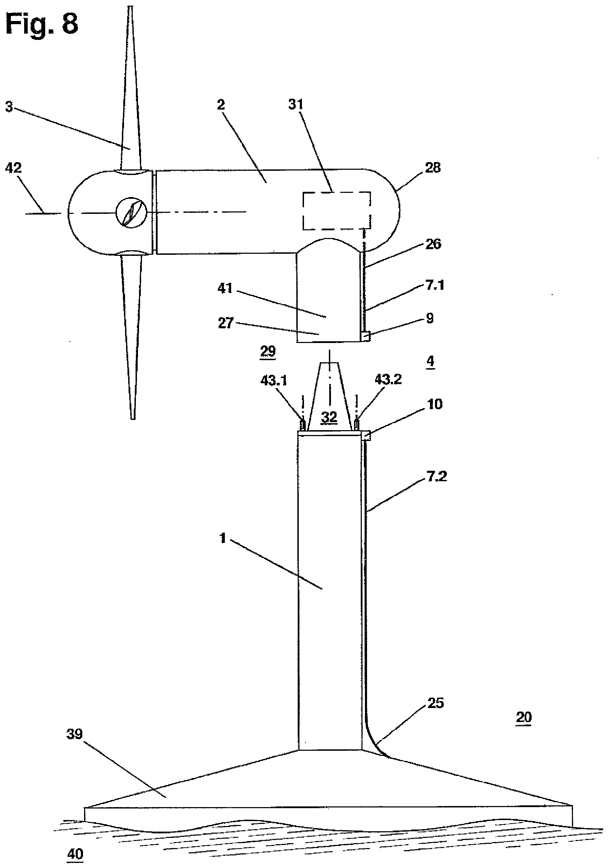

Figur 8 stellt schematisch vereinfacht ein modulares Strömungskraftwerk 20 dar, das bevorzugt als Gezeitenströmungskraftwerk oder Flusswasserkraftwerk verwendet wird. Das modulare Strömungskraftwerk 20 umfasst eine Stützstruktur 1 in Form eines Turms, der eine Gründungsstruktur in Form eines Schwerkraftfundaments 39 aufweist, das auf dem Gewässergrund 40 ruht. Das obere Anlagenteil bildet eine Maschinengondel 2, an der die propellerförmige Wasserturbine 3 mit einer horizontalen Drehachse 42 freiumströmt umläuft. Innerhalb der Maschinengondel 2 befindet sich ein elektrischer Generator 31, der in Triebverbindung zur Wasserturbine 3 steht. Bei der Montage wir die Maschinengondel 2 auf die Stützstruktur 1 aufgesetzt, wobei zur Ausrichtung und Sicherung eine Kopplungsvorrichtung 29 dient, die turmseitig einen Pyramidenstumpf 32 und gondelseitig ein komplementäres Gegenstück in Form eines Turmadapters 41 umfasst.

Für die in Figur 8 gezeigte Ausgestaltung liegt eine Unterwasser-Steckvorrichtung 4 an der Anlagenaußenseite, wobei eine erste Baugruppe 9 am Turmadapter 41 der Maschinengondel 2 befestigt ist. Eine zweite Baugruppe 10 der Unterwasser-Steckvorrichtung 4 ist so an der Stützstruktur 1 angebracht, wobei beim Aufsetzen der Maschinengondel 2 auf die Stützstruktur 1 die erste Baugruppe 9 und die zweite Baugruppe 10 der Unterwasser-Steckvorrichtung 4 gegeneinandergeführt werden, dass eine Grundausrichtung besteht. Zur Drehsicherung dieser Grundausrichtung dienen Zentrierungsstifte 43.1, 43.2 der Kopplungsvorrichtung 29.

Das in Figur 8 skizzierte modulare Strömungskraftwerk stellt eine bidirektional anströmbare Anlage dar, für die bei einem Wechsel der Anströmungsrichtung keine Nachführung um die Gierachse notwendig ist. Entsprechend bleiben die erste Baugruppe 9 und die zweite Baugruppe 10 der Unterwasser-Steckvorrichtung 4 ortsfest. Dabei schließen sich an die erste Baugruppe 9 und die zweite Baugruppe 10 Leitungsverbindungen 7.1, 7.2 an, die ein zum elektrischen Generator 31 geführtes Leistungskabel 26 und ein mit diesem über die Unterwasser-Steckvorrichtung 4 verbundenes, von der Anlage weglaufendes Seekabel 25 umfassen. Die Leitungsverbindungen 7.1, 7.2 verlaufen für eine einfache Ausführung wenigstens zum Teil entlang der Außenwandung der Stützstruktur 1 sowie am Turmadapter 41, wobei die hierfür nötigen Sicherungs- und Befestigungsmaßnahmen im Einzelnen nicht dargestellt sind.

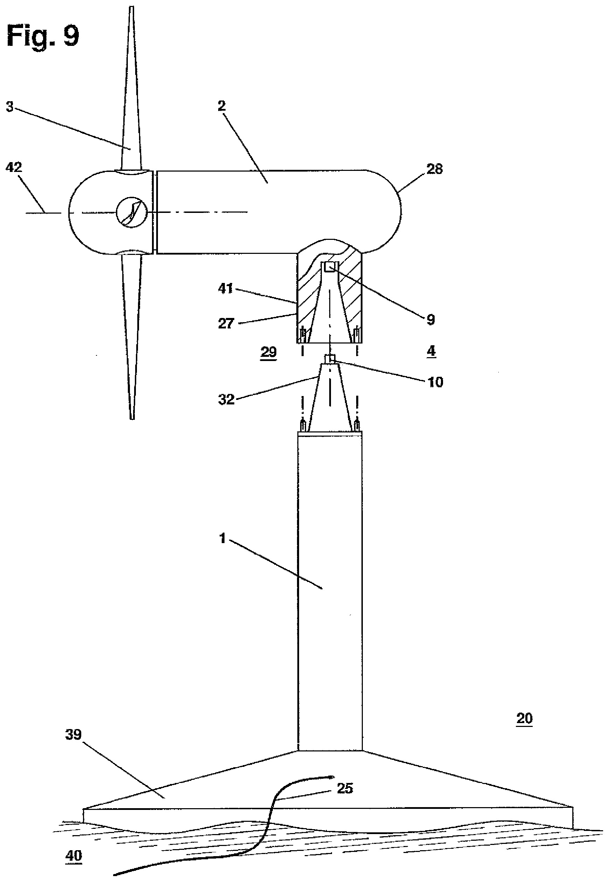

Figur 9 zeigt eine alternative Ausgestaltung mit einer in die Kopplungsvorrichtung 29 des modularen Strömungskraftwerks aufgenommenen Unterwasser-Steckvorrichtung 4. Dabei liegt die erste Baugruppe 9 innerhalb des in Teilschnittansicht gezeigten Turmadapters 41, während die zweite Baugruppe 10 auf der Spitze des Pyramidenstumpfs 32 angebracht ist. In Betriebsstellung befinden sich die erste Baugruppe 9 und die zweite Baugruppe 10 der Unterwasser-Steckvorrichtung 4 im Innern der Kopplungsvorrichtung 9, sodass sie von einer Wandung 27 des Turmadapters 41 von der Umgebungsströmung abgeschirmt werden.

Die im Einzelnen nicht dargestellten, von der ersten und zweiten Baugruppe 9, 10 ausgehenden Leitungsverbindungen laufen im Innern der Anlage. Skizziert ist die Möglichkeit, das Seekabel im Bereich des Schwerkraftfundaments 39 aus der Anlage herauszuführen. Möglich ist jedoch auch eine geschützte, vollständig unterirdische Verlegung des Seekabels.

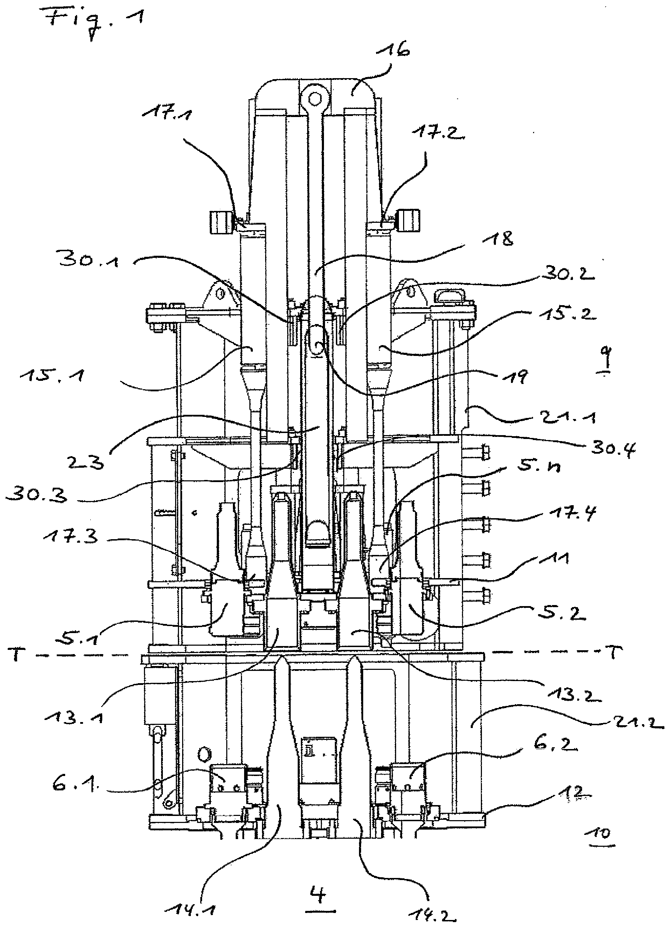

Das erfindungsgemäße modulare Strömungskraftwerk zeichnet sich durch die Ausführung der Unterwasser-Steckvorrichtung 4 aus. Ein bevorzugtes Ausgestaltungsbeispiel ist in Figur 1 in Seitenansicht dargestellt. Gezeigt ist die erste Baugruppe 9, die oberhalb der gestrichelten Linie T-T liegt. Unterhalb ist die zweite Baugruppe 10 angeordnet. Die erste Baugruppe 9 ist an einer Komponente der Maschinengondel 2 befestigt und die zweite Baugruppe 10 wird von der Stützstruktur 1 getragen. Diese Befestigungen sind im Einzelnen nicht dargestellt.

Figur 1 zeigt die Grundausrichtung der ersten Baugruppe 9 relativ zur zweiten Baugruppe 10, die nach einem ordnungsgemäßen Aufsetzen der Maschinengondel 2 auf die Stützstruktur 1 resultiert. Gezeigt ist, dass die buchsenförmig ausgebildeten Zentrierungselemente 13.1, 13.2 der ersten Baugruppe 9 in der Grundausrichtung einen Fangbereich aufweisen, der es ermöglicht, die zugeordneten Zentrierungsgegenstücke 14.1, 14.2 der zweiten Baugruppe 10 sicher aufzunehmen. Dabei stehen die Zentrierungselemente 13.1, 13.2 in Verbindung zur ersten Steckerplatte 11 und die zugeordneten Zentrierungsgegenstücke 14.1, 14.2 sind an der zweiten Steckerplatte 12 befestigt.

Für die dargestellte Ausgestaltung sind für die zweite Baugruppe 10 auf der zweiten Steckerplatte 12 Steckerbuchsen 6.1, ..., 6.n angeordnet, wobei die zweite Steckerplatte 12 starr mit einem Rahmen 22.2 der zweiten Baugruppe 10 verbunden ist. Im Gegensatz hierzu ist die erste Steckerplatte 11 der ersten Baugruppe 9, die neben den Zentrierungselementen 13.1, 13.2 mehrere Stecker 5.1, ..., 5.n trägt, bezüglich der drei translatorischen und der drei rotatorischen Freiheitsgrade beweglich gegenüber dem Rahmen 22.1 der ersten Baugruppe 9 befestigt. Damit ist eine Ausgleichsbewegung der ersten Steckerplatte 11 gegenüber der zweiten Steckerplatte 12 beim Zusammenführen der Zentrierungselemente 13.1, 13.2 und der Zentrierungsgegenstücken 14.1, 14.2 möglich. Erfindungsgemäß wird dieser Bewegungsumfang dadurch bewirkt, dass die erste Steckerplatte 11 an mehreren Linearverstellelementen 15.1, ..., 15.4 an einem Tragelement 16 der ersten Baugruppe 9 aufgehängt ist. Vorliegend werden vier Linearverstellelemente 15.1, ..., 15.4 verwendet, die jeweils als Federstangen ausgebildet sind. Dabei umfassen die Federstangen federvorgespannte Kolbenstangen, sodass ihr Bewegungsumfang auf einen translatorischen Freiheitsgrad beschränkt ist.

Zur endgültigen Zentrierung ausgehend von der Grundstellung zwischen der ersten Baugruppe 9 und der zweiten Baugruppe 10 wird für die in Figur 1 gezeigte bevorzugte Ausgestaltung ein Linearantrieb 18 verwendet, der vorliegend in Form eines Hydraulikzylinders 23 ausgebildet ist. Zur Zentrierung und Ausbildung einer Wirkverbindung zwischen den Steckern 5.1, ..., 5.n und den Steckerbuchsen 6.1, ..., 6.n erfolgt eine Einfahrbewegung des Hydraulikzylinders 23, der das Tragelement 16 an Seitenführungen 30.1, ..., 30.4 am Rahmen 22.1 auf die zweite Baugruppe 10 zubewegt. Durch die konischen Ablaufflächen innerhalb der buchsenförmigen Zentrierungselemente 13.1, 13.2 und der als Führungsstifte ausgebildeten Zentrierungsgegenstücke 14.1, 14.2 erfolgt eine Zentrierung der ausweichenden ersten Steckerplatte 11 relativ zur starr befestigten zweiten Steckerplatte 12, sodass eine fluchtende Stellung der Stecker 5.1, ..., 5.n relativ zu den zugeordneten Steckerbuchsen 6.1, ..., 6.n resultiert.

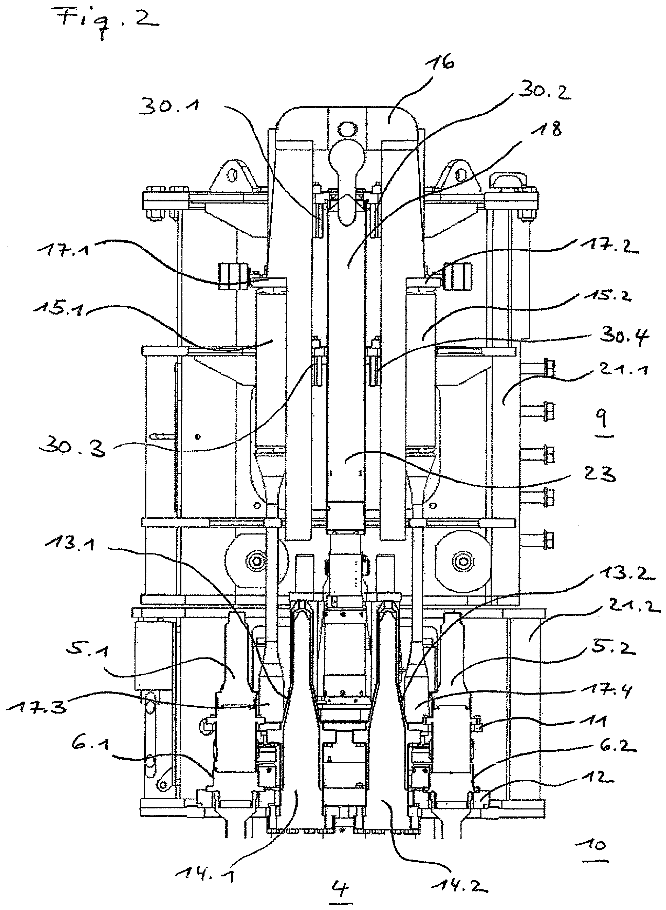

Die Situation nach Abschluss der Stellbewegung durch den Linearantrieb 18 zeigt Figur 2. Dargestellt ist die Kopplungsstellung mit ineinandergreifenden Zentrierungselementen 13.1, 13.2 und den Zentrierungsgegenstücken 14.1, 14.2 und den zueinander ausgerichteten Steckerplatten 11, 12. Für die gezeigte Ausgestaltung sind die Stecker 5.1, 5.2 und die zugeordneten Steckerbuchsen 6.1, 6.2 an den jeweiligen Steckerplatten 11, 12 starr befestigt und so positioniert, dass bei einem formschlüssigen Ineinandergreifen der Zentrierungselemente 13.1, 13.2 und der Zentrierungsgegenstücke 14.1, 14.2 nicht nur die fluchtende Stellung, sondern zusätzlich der Wirkkontakt für die Stecker hergestellt ist. Eine solche Ausführung kann für elektrische und optische Signalverbindungen oder für hydraulische oder pneumatische Versorgungsleitungen verwendet werden.

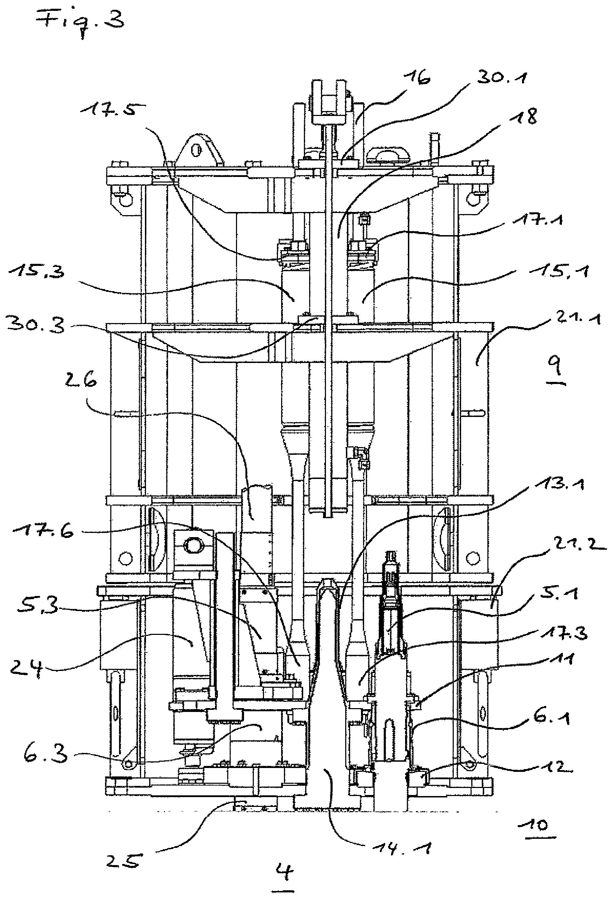

Für eine bevorzugte Ausgestaltung besteht eine separate Koppel- und Entkoppelbarkeit einzelner Steckerpaarungen. Dies wird anhand von Figur 3 illustriert, die die Unterwasser-Steckvorrichtung 4 in der gekoppelten Stellung von Figur 2 in Seitenansicht zeigt. Ersichtlich ist, dass dem Stecker 5.3 und der zugeordneten Steckerbuchse 6.3 ein separater Steckeraktuator 24 zugeordnet ist. Dieser erlaubt eine getrennte Kopplung und ein entsprechend getrenntes Entkoppeln unabhängig von den anderen Steckern. Dabei wird genutzt, dass die voranstehend beschriebene Zusammenführung der ersten Baugruppe 9 und der zweiten Baugruppe 10 der Unterwasser-Steckvorrichtung 4 zu einer Zentrierung der ersten Steckerplatte 11 relativ zur zweiten Steckerplatte 12 führt, sodass durch einen linear wirkenden Aktor der Einsteckvorgang sicher ausgeführt werden kann.

Die Kopplungsstellung mit einer Ausrichtung der ersten Steckerplatte 11 relativ zur zweiten Steckerplatte 12 wird bevorzugt durch ein Sicherungselement fixiert, wobei für eine vorteilhafte Ausgestaltung das Sicherungselement 37 in den Linearantrieb 18 für das Tragelement 16 der ersten Baugruppe 9 aufgenommen ist. Aus dieser gesicherten Stellung kann durch eine translatorische Bewegung des separaten Steckeraktuators 24 ein kraftreduziertes und damit sicheres Schalten wichtiger Verbindungen erfolgen. Besonders bevorzugt erlaubt der separate Steckeraktuator 24 einen Stecker 5.3, an den sich ein zum elektrischen Generator 31 führendes Leistungskabel 26 anschließt, wählbar mit einem an der Steckerbuchse 6.3 angebrachten Seekabel 25 zu verbinden. Ist der elektrische Generator 31 als permanentmagneterregte Maschine ausgeführt, führen bereits geringfügige Bewegungen einer direkt gekoppelten Wasserturbine 3 zu einer Spannungserzeugung auf dem Leistungskabel 26, sodass eine schnelle und sichere Abkoppelbarkeit des Seekabels 25 den Anlagenbetrieb sicherer gestaltet.

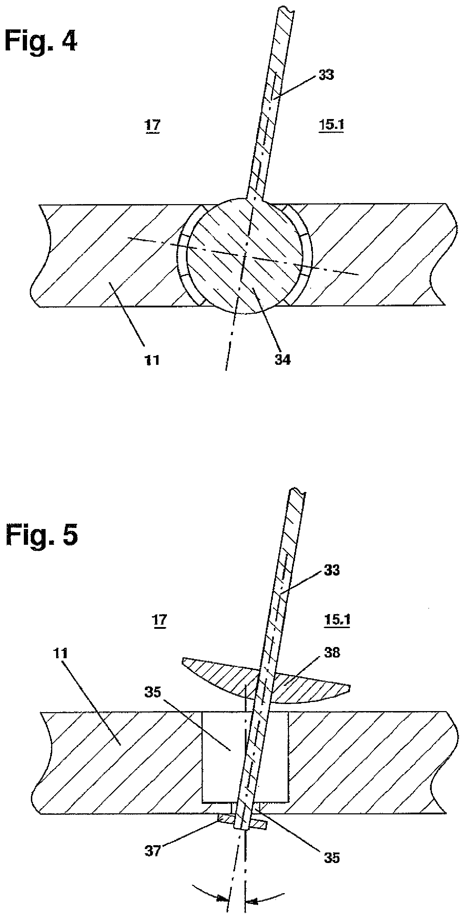

Die zur Aufhängung der ersten Steckerplatte 11 verwendeten Linearverstellelemente 15.1, ..., 15.4 erlauben translatorische Stellbewegungen. Um eine Bewegung in allen Freiheitsgraden für die erste Steckerplatte 11 sicherzustellen, müssen die Befestigungen 17.1, ..., 17.4 der Linearverstellelemente 15.1, ..., 15.4 am Tragelement 16 einerseits und der ersten Steckerplatte 11 andererseits eine Bewegungsfreiheit bezüglich der drei Rotationsachsen aufweisen. Diese Funktion erfüllt ein Kugelgelenk 34, das schematisch in Figur 4 skizziert ist. Gezeigt ist ein Abschnitt der ersten Steckerplatte 11 mit einem darin eingelassenen Kugelgelenk 34, an das sich eine Kolbenstange 33 des Linearverstellelements 15.1 anschließt.

Figur 5 zeigt eine alternative Ausgestaltung der Befestigung 17 für das Linearverstellelement 15.1 an der ersten Steckerplatte 11, das einen entsprechenden Bewegungsumfang wie die in Figur 4 gezeigte Ausführung bietet und zugleich eine konstruktive Vereinfachung darstellt. Hierzu ist die Kolbenstange 33 durch eine weite erste Bohrung 35 und eine engere zweite Bohrung 36 in der ersten Steckerplatte 11 geführt und durch ein Sicherungselement 37 rückseitig gegen eine Abzugsbewegung fixiert. Um in die Einsteckrichtung Kräfte ausüben zu können, ist eine Stützscheibe 38 mit einer gerundet ausgeführten Ablauffläche auf der Kolbenstange 33 oberhalb der ersten Bohrung 35 angeordnet. Diese ist so dimensioniert, dass ein Abstützen und Abgleiten auf der Oberseite der ersten Steckerplatte 11 möglich ist. Dabei sind der Durchmesser der Kolbenstange 33 und die Anordnung sowie die Formgestaltung der Stützscheibe 38 sowie des Sicherungselements 37 so an die Dimensionen der ersten und zweiten Bohrung 35, 36 angepasst, dass Schwenkbewegungen relativ zur Bohrungsachse möglich sind. Entsprechend umfasst die Befestigung 17 gemäß Figur 5 in vorgegebenen Grenzen die Bewegungsfähigkeit des in Figur 4 dargestellten Kugelgelenks 34. Zugleich erlaubt die konstruktive Vereinfachung, die Standzeit der Unterwasser-Steckvorrichtung, insbesondere bei einem Meeresstandort, zu erhöhen. Weitere Ausgestaltungen von Befestigungen, die die geforderte Bewegungsmöglichkeit aufweisen, sind möglich. Dabei können elastisch verformbare Buchsen verwendet werden.

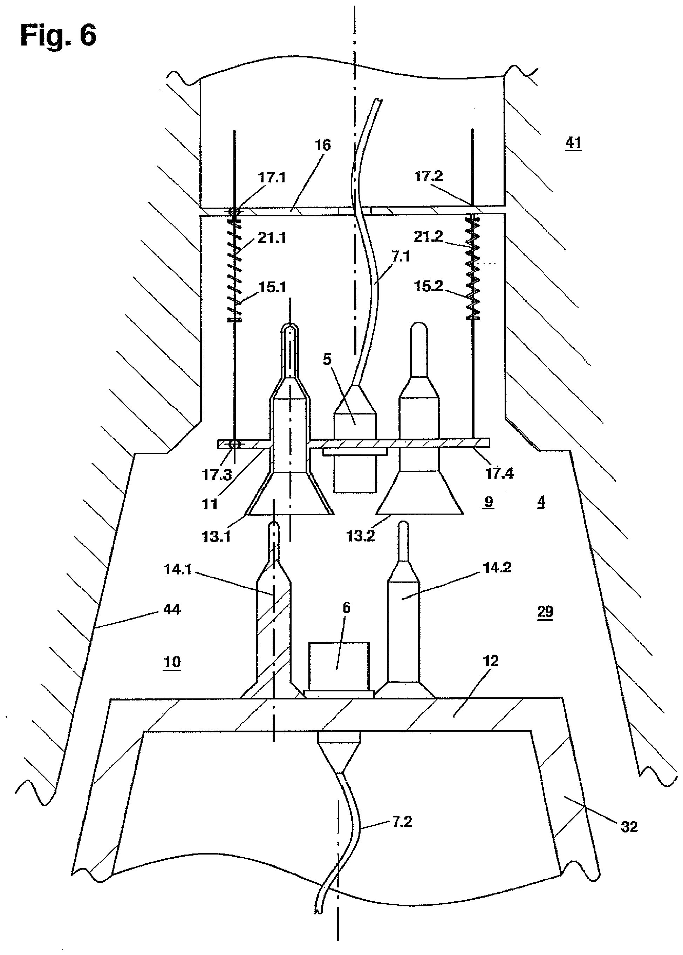

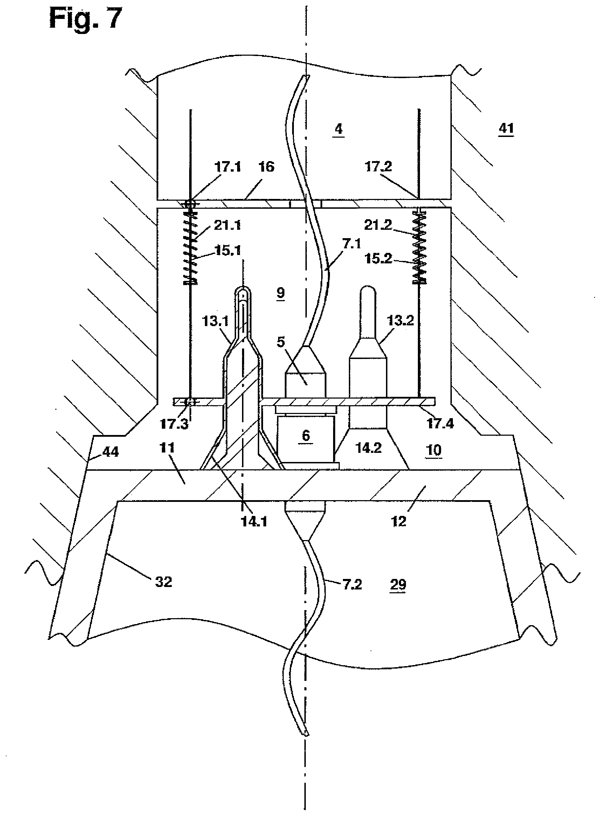

Figuren 6 und 7 zeigen eine weitere bevorzugte Ausführungsform der Erfindung. Dargestellt ist eine Unterwasser-Steckvorrichtung 4, die in die Kopplungsvorrichtung 29 eines modularen Strömungskraftwerks integriert ist. Innerhalb des Turmadapters 41, der einen Teil der Maschinengondel 2 bildet, liegt die erste Baugruppe 9. Die zweite Baugruppe 10 ist auf dem turmseitig liegenden Pyramidenstumpf 32 angeordnet. Die mit den voranstehend beschriebenen Ausführungen übereinstimmenden Komponenten werden mit den gleichen Bezugszeichen bezeichnet und zur Vermeidung von Wiederholungen nicht weiter beschrieben. Abweichend zur Ausgestaltung der Unterwasser-Steckvorrichtung 4 gemäß Figur 1 wird für das vorliegende Ausführungsbeispiel ein innerhalb der ersten Baugruppe 9 ortsfestes Tragelement 16 verwendet. Gezeigt ist eine stoffschlüssige Anbindung an der Innenwandung des Turmadapters 41. Die als Federstangen 21.1, 21.2 ausgebildeten Linearverstellelemente 15.1, 15.2 sind wiederum mittels der Befestigungen 17.1, ..., 17.4 so am Tragelement 16 und der ersten Steckerplatte 11 angelenkt, sodass für die erste Steckerplatte 11 gegenüber den lagenfesten Komponenten des Turmadapters 41 eine Bewegung in sechs Freiheitsgraden möglich ist.

Beim Aufsetzen der Maschinengondel 2 auf die Stützstruktur 1 erfolgt eine Zentrierung des Turmadapters 41 durch ein Abgleiten der konischen Ablaufflächen 44 an der Außenwandung des Pyramidenstumpfs 32. Dabei sind die Komponenten der ersten Baugruppe 9 und der zweiten Baugruppe 10 der Unterwasser-Steckvorrichtung 4 so dimensioniert, dass im Verlauf dieses Ankopplungsprozesses die Zentrierungselemente 13.1, 13.2 auf der ersten Steckerplatte 11 formschlüssig in die Zentrierungsgegenstücke 14.1, 14.2 der zweiten Steckerplatte 12 eingreifen, bis die eine Ausweichbewegung ermöglichenden Federstangen 21.1, 21.2 eine die Steckkraft übersteigende elastische Rückstellkraft bei gleichzeitiger Zentrierung und fluchtender Ausrichtung des Steckers 5 gegenüber der Steckerbuchse 6 zur Herstellung der Wirkverbindung aufbringen. Demnach erfolgt die Zentrierung und Kopplung der integrierten Unterwasser-Steckvorrichtung 4 ohne zusätzliche Aktuatoren beim Absetzen der Maschinengondel 2 auf der Stützstruktur 1.

Die Anschläge und Wandungsabstände für die beweglichen Komponenten der ersten Baugruppe 9 sind so gewählt, dass beim Zusammenführen der beiden Teile der Unterwasser-Steckvorrichtung 4 im Fangbereich der Zentrierungselemente 13.1, 13.2 und der zugeordneten Zentrierungsgegenstücke 14.1, 14.2 liegt. Für eine mögliche Weitergestaltung wird der bei Betrieb der Anlage zu erwartende Bewegungsumfang zwischen der Maschinengondel und der Stützstruktur bei der Bemaßung der vorgegebenen Bewegungsgrenze in der Kopplungsstellung berücksichtigt. Weitere Ausgestaltungen der Erfindung ergeben sich durch die nachfolgenden Schutzansprüche.

### Bezugszeichen liste

- 1: Stützstruktur
- 2: Maschinengondel
- 3: Wasserturbine
- 4: Unterwasser-Steckvorrichtung
- 5, 5.1, ...., 5.n: Stecker
- 6, 6.1, ...., 6.n: Steckerbuchse
- 7.1, 7.2: Leitungsverbindungen
- 9: erste Baugruppe
- 10: zweite Baugruppe
- 11: erste Steckerplatte
- 12: zweite Steckerplatte
- 13.1, 13.2: Zentrierungselement
- 14.1, 14.2: Zentrierungsgegenstück
- 15.1,..., 15.4: Linearverstellelement
- 16: Tragelement
- 17, 17.1, ..., 17.6: Befestigung
- 18: Linearantrieb
- 19: Verriegelungseinrichtung
- 20: Modulares Strömungskraftwerk
- 21.1, 21.2: Federstange
- 22.1, 22.2: Rahmen
- 23: Hydraulikzylinder
- 24: separater Steckeraktuator
- 25: Seekabel
- 26: Leistungskabel
- 27: Wandung
- 28: Gehäuse
- 29: Kopplungsvorrichtung
- 30.1 - 30.4: Seitenführung
- 31: elektrischer Generator
- 32: Pyramidenstumpf
- 33: Kolbenstange
- 34: Kugelgelenk
- 35: erste Bohrung
- 36: zweite Bohrung
- 37: Sicherungselement
- 38: Stützscheibe
- 39: Schwerkraftfundament
- 40: Gewässergrund
- 41: Turmadapter
- 42: Drehachse
- 43.1, 43.2: Zentrierungsstifte
- 44: konische Ablauffläche

## Patentansprüche

1. Modulares Strömungskraftwerk, umfassend die folgenden Merkmale:
1.1 eine Stützstruktur (1);
1.2 eine auf die Stützstruktur (1) aufsetzbare Maschinengondel (2) mit einer Wasserturbine (3);
1.3 eine Unterwasser-Steckvorrichtung (4) mit wenigstens einem Stecker (5, 5.1, ...., 5.n) und einer zugeordneten Steckerbuchse (6, 6.1, ...., 6.n) und daran anschließende Leitungsverbindungen (7.1, 7.2), wobei
1.4 die Unterwasser-Steckvorrichtung (4) eine erste Baugruppe (9) umfasst, die mit der Maschinengondel (2) verbunden ist, und eine zweite Baugruppe (10), die mit der Stützstruktur (1) verbunden ist,
1.5 und wobei die erste Baugruppe (9) eine erste Steckerplatte (11) mit wenigstens einem Zentrierungselement (13.1, 13.2) und die zweite Baugruppe (10) eine zweite Steckerplatte (12) mit wenigstens einem zum Zentrierungselement (13.1, 13.2) komplementär ausgebildeten Zentrierungsgegenstück (14.1, 14.2) umfasst; **dadurch gekennzeichnet, dass**
1.6 die erste Steckerplatte (11) über mehrere Linearverstellelemente (15.1, ..., 15.4) an einem der ersten Baugruppe (9) zugeordneten Tragelement (16) aufgehängt ist, wobei Befestigungen (17, 17.1, ..., 17.6) der Linearverstellelemente (15.1, ..., 15.4) an der ersten Steckerplatte (11) und am Tragelement (16) so ausgebildet sind, dass die erste Steckerplatte (11) für die drei Freiheitsgrade der Translationen und die drei Freiheitsgrade der Rotation in vorgegebenen Grenzen beweglich ist; und wobei
1.7 die Befestigungen (17, 17.1, ..., 17.6) der Linearverstellelemente (15.1, ..., 15.4) an der ersten Steckerplatte (11) und am Tragelement (16) mindestens die Freiheitsgrade eines Kugelgelenks (34) aufweisen.

2. Modulares Strömungskraftwerk nach Anspruch 1, wobei das Tragelement (16) mittels eines Linearantriebs (18) gegenüber einem Rahmen (22.1, 22.2) der ersten Baugruppe (9), der relativ zur Maschinengondel (2) ortsfest ist, in eine Translationsrichtung bewegbar ist.

3. Modulares Strömungskraftwerk nach Anspruch 2, wobei der Linearantrieb (18) als Hydraulikzylinder (23) ausgebildet ist.

4. Modulares Strömungskraftwerk nach einem der Ansprüche 2 oder 3, wobei der Linearantrieb (18) eine integrierte Verriegelungseinrichtung (19) umfasst.

5. Modulares Strömungskraftwerk nach einem der vorausgehenden Ansprüche, wobei die Linearverstellelemente (15.1, ..., 15.4) zur Aufhängung der ersten Steckerplatte (11) am Tragelement (16) als Federstangen (21.1, 21.2) ausgebildet sind.

6. Modulares Strömungskraftwerk nach einem der vorausgehenden Ansprüche, wobei die erste Steckerplatte (11) an wenigstens drei Linearverstellelementen (15.1, ..., 15.4) am Tragelement (16) aufgehängt ist.

7. Modulares Strömungskraftwerk nach einem der vorausgehenden Ansprüche, wobei der Stecker (5, 5.1, ...., 5.n) und die zugeordnete Steckerbuchse (6, 6.1, ...., 6.n) eine elektrische oder optische oder hydraulische Steckverbindung bilden.

8. Modulares Strömungskraftwerk nach einem der vorausgehenden Ansprüche, wobei der Stecker (5, 5.1, ...., 5.n) mit der ersten Steckerplatte (11) oder der zweiten Steckerplatte (12) wenigstens mittelbar verbunden ist und die dem Stecker (5, 5.1, ...., 5.n) zugeordnete Steckerbuchse (6, 6.1, ...., 6.n) auf der jeweils anderen Steckerplatte (11, 12) liegt.

9. Modulares Strömungskraftwerk nach Anspruch 8, wobei der Stecker (5, 5.1, ...., 5.n) und die zugeordnete Steckerbuchse (6, 6.1, ...., 6.n) starr an der jeweiligen Steckerplatte (11, 12) befestigt sind.

10. Modulares Strömungskraftwerk nach Anspruch 8, wobei der Stecker (5, 5.1, ...., 5.n) und/oder die zugeordnete Steckerbuchse (6, 6.1, ...., 6.n) einem separaten Steckeraktuator (24) zugeordnet sind, der eine Relativbewegung zur jeweiligen Steckerplatte (11, 12) erlaubt.

11. Modulares Strömungskraftwerk nach Anspruch 10, wobei der Stecker (5, 5.1, ...., 5.n) und/oder die zugeordnete Steckerbuchse (6, 6.1, ...., 6.n) mit separatem Steckeraktuator (24) ein Verbindungsglied zwischen einem vom modularen Strömungskraftwerk wegführenden Seekabel (25) und einem mit einem elektrischen Generator (31) in der Maschinengondel verbundenen Leistungskabel (26) bildet.

12. Modulares Strömungskraftwerk nach einem der vorausgehenden Ansprüche, wobei die Unterwasser-Steckvorrichtung in eine Kopplungsvorrichtung (29) an der Stützstruktur (1) integriert und von einer Wandung (27) der Strömungskraftwerks umgeben ist.

13. Modulares Strömungskraftwerk nach einem der Ansprüche 1 - 11, mit einer bidirektional anströmbaren Wasserturbine (3) und einer drehstarr auf die Stützstruktur (1) absetzbaren Maschinengondel (2), wobei die Unterwasser-Steckvorrichtung außerhalb eines Gehäuses (28) der Maschinengondel (2) und außerhalb einer Wandung der Stützstruktur (1) angeordnet ist.

14. Montageverfahren für ein modulares Strömungskraftwerk nach einem der vorausgehenden Ansprüche, umfassend die Verfahrensschritte:
- Aufsetzen der Maschinengondel auf die Stützstruktur (1);
- Ausrichtung der mit der Maschinengondel (2) verbundenen ersten Baugruppe (9) relativ zu der mit der Stützstruktur (1) verbundenen zweiten Baugruppe (10) der Unterwasser-Steckvorrichtung;
- Bewegung des Zentrierungselements (13.1, 13.2) zum Zentrierungsgegenstück (14.1, 14.2) bis diese formschlüssig ineinandergreifen und die erste Steckerplatte (11) der ersten Baugruppe (9) eine Ausgleichsbewegung relativ zur zweiten Steckerplatte (12) der zweiten Baugruppe (10) ausführt und der Stecker (5, 5.1, ...., 5.n) und die zugeordnete Steckerbuchse (6, 6.1, ...., 6.n) fluchten.

15. Montageverfahren für ein modulares Strömungskraftwerk nach Anspruch 14, wobei beim formschlüssigen Ineinandergreifen des Zentrierungselements (13.1, 13.2) und des Zentrierungsgegenstücks (14.1, 14.2) die Wirkverbindung zwischen Stecker (5, 5.1, ...., 5.n) und zugeordneter Steckerbuchse (6, 6.1, ...., 6.n) hergestellt wird.

16. Montageverfahren für ein modulares Strömungskraftwerk nach Anspruch 14, wobei nachdem Fluchten des Steckers (5.1, ...., 5.n) und zugeordneter Steckerbuchse (6, 6.1, ...., 6.n) ein separater Steckeraktuator (24) den Stecker (5, 5.1, ...., 5.n) und/oder zugeordneter Steckerbuchse (6, 6.1, ...., 6.n) relativ zur jeweiligen Steckerplatte (11, 12) bewegt, sodass eine Wirkverbindung zwischen Stecker (5, 5.1, ...., 5.n) und zugeordneter Steckerbuchse (6, 6.1, ...., 6.n) hergestellt wird.

## Claims

1. Modular flow power plant, comprising the following features:
1.1 a support structure (1);
1.2 a machine nacelle (2) which can be placed on the support structure (1) with a water turbine (3);
1.3 an underwater plug-in device (4) having at least one plug (5, 5.1, ...., 5.n) and an associated plug socket (6, 6.1, ...., 6.n) and adjoining line connections (7.1, 7.2), wherein
1.4 the underwater plug-in device (4) comprises a first module (9) connected to the nacelle (2) and a second module (10) connected to the support structure (1),
1.5 and wherein the first module (9) has a first connector plate (11) with at least one centering element (13.1, 13.2) and the second module (10) a second connector plate (12) with at least one centering counterpart (14.1, 14.2) arranged complementary to the centering element (13.1,13.2);
**characterized in that**
1.6 the first connector plate (11) is suspended by a plurality of linear adjustment elements (15.1, ..., 15.4) on a support element (16) associated with the first module (9), wherein fastenings (17, 17.1, ..., 17.6) of the linear adjustment elements (15.1, ..., 15.4) are formed on the first connector plate (11) and the support element (16) so that the first connector plate (11) is movable within predetermined limits for the three degrees of freedom of the translations and the three degrees of freedom of rotation, and wherein
1.7 the fastenings (17,17.1, ..., 17.6) of the linear adjustment elements (15.1, ..., 15.4) have at least the degrees of freedom of a ball joint (34) on the first connector plate (11) and on the support element (16).

2. Modular flow power plant according to claim 1, wherein the support element (16) is movable in a translation direction by means of a linear drive (18) relative to a frame (22.1, 22.2) of the first module (9), which is stationary relative to the machine nacelle (2).

3. Modular flow power plant according to claim 2, wherein the linear drive (18) is designed as a hydraulic cylinder (23).

4. Modular flow power plant according to one of the claims 2 or 3, wherein the linear drive (18) comprises an integrated locking device (19).

5. Modular flow power plant according to one of the preceding claims, wherein the linear adjustment elements (15.1, ..., 15.4) are formed for suspending the first connector plate (11) on the support element (16) as spring rods (21.1, 21.2).

6. Modular flow power plant according to one of the preceding claims, wherein the first connector plate (11) is suspended on the support element (16) on at least three linear adjustment elements (15.1, ..., 15.4).

7. Modular flow power plant according to one of the preceding claims, wherein the plug (5, 5.1, ..., 5.n) and the associated plug socket (6, 6.1, ..., 6.n) form an electrical or optical or hydraulic plug connection.

8. Modular flow power plant according to one of the preceding claims, wherein the plug (5, 5.1, ..., 5.n) is at least indirectly connected to the first connector plate (11) or the second connector plate (12), and the plug socket (6, 6.1, ..., 6.n) associated with the plug (5, 5.1, ..., 5.n) is located on the respective other connector plate (11, 12).

9. Modular flow power plant according to claim 8, wherein the plug (5, 5.1, ..., 5.n) and the associated plug socket (6, 6.1, ..., 6.n) are rigidly fastened to the respective connector plate (11, 12).

10. Modular flow power plant according to claim 8, wherein the plug (5, 5.1, ..., 5.n) and/or the associated plug socket (6, 6.1, ..., 6.n) are associated with a separate plug actuator (24), which allows a relative movement to the respective connector plate (11, 12).

11. Modular flow power plant according to claim 10, wherein the plug (5, 5.1, ..., 5.n) and/or the associated plug socket (6, 6.1, ...., 6.n) form with a separate plug actuator (24) a connecting link between an underwater cable (25) leading away from the modular flow power plant and a power cable (26) connected to an electric generator (31) in the machine nacelle.

12. Modular flow power plant according to one of the preceding claims, wherein the underwater plug-in device is integrated in a coupling device (29) on the support structure (1) and is surrounded by a wall (27) of the flow power plant.

13. Modular flow power plant according to one of claims 1 to 11, having a water turbine (3) with bidirectional inflow and a machine nacelle (2) that can be positioned in a rotationally fixed manner on the support structure (1), wherein the underwater plug-in device is arranged outside a housing (28) of the machine nacelle (2) and outside a wall of the support structure (1).

14. Assembly method for a modular flow power plant according to one of the preceding claims, comprising the method steps:
- placing the nacelle on the support structure (1);
- aligning the first module (9) connected to the machine nacelle (2) relative to the second module (10) of the underwater plug-in device connected to the support structure (1);
- moving the centering element (13.1, 13.2) relative to the centering counterpart (14.1, 14.2) until they intermesh positively and the first connector plate (11) of the first module (9) performs a compensating movement relative to the second connector plate (12) of the second module (10) and the plug (5, 5.1, ...., 5.n) and the assigned plug socket (6, 6.1, ...., 6.n) are aligned.

15. Assembly method for a modular flow power plant according to claim 14, wherein the operative connection between the plug (5, 5.1, ...., 5.n) and the associated plug socket (6, 6.1, ...., 6.n) is produced in the positive mutual engagement of the centering element (13.1, 13.2) and the centering counterpart (14.1, 14.2).

16. Assembly method for a modular flow power plant according to claim 14, wherein after the alignment of the plug (5, 5.1, ..., 5.n) and the associated plug socket (6, 6.1, ..., 6.n) a separate plug actuator (24) moves the plug (5, 5.1, ..., 5.n) and/or the associated plug socket (6, 6.1, ..., 6.n) relative to the respective connector plate (11, 12), so that an operative connection is produced between the plug (5, 5.1, ..., 5.n) and the associated plug socket (6, 6.1, ..., 6.n).

## Revendications

1. Hydrolienne modulaire, comprenant :
1.1 une structure de support (1) ;
1.2 une nacelle de machine (2) pouvant être posée sur la structure de support (1), avec une turbine hydraulique (3) ;
1.3 un dispositif de connexion submergé (4) avec au moins un connecteur (5, 5.1..., 5.n) et une prise femelle (6, 6.1..., 6.n) correspondante et des lignes de connexion (7.1, 7.2) qui s'y raccordent,
1.4 le dispositif de connexion submergé (4) comprenant un premier sous-ensemble (9) qui est relié à la nacelle de machine (2) et un deuxième sous-ensemble (10) relié à la structure de support (1),
1.5 et le premier sous-ensemble (9) comprenant une première platine de connexion (11) avec au moins un élément de centrage (13.1, 13.2) et le deuxième sous-ensemble (10) une deuxième platine de connexion (12) avec au moins une pièce de centrage opposée (14.1,14.2) de forme complémentaire de l'élément de centrage (13.1, 13.2),
**caractérisée en ce que**
1.6 la première platine de connexion (11) est suspendue par plusieurs éléments de déplacement linéaire (15.1..., 15.4) à un élément portant (16) associé au premier sous-ensemble (9), des fixations (17, 17.1..., 17.6) des éléments de déplacement linéaire (15.1..., 15.4) étant formées sur la première platine de connexion (11) et sur l'élément portant (16) de telle manière que la première platine de connexion (11) soit mobile dans des limites prédéterminées dans les trois degrés de mouvement de translation et les trois degrés de mouvement de rotation, et dans laquelle
1.7 les fixations (17, 17.1..., 17.6) des éléments de déplacement linéaire (15.1..., 15.4) sur la première platine de connexion (11) et sur l'élément portant (16) présentent au moins les degrés de liberté d'une articulation à rotule (34).

2. Hydrolienne modulaire selon la revendication 1, dans laquelle l'élément portant (16) peut être déplacé dans une direction de translation au moyen d'un entraînement linéaire (18) par rapport à un châssis (22.1, 22.2) du premier sous-ensemble (9) qui est stationnaire par rapport à la nacelle de machine (2).

3. Hydrolienne modulaire selon la revendication 2, dans laquelle l'entraînement linéaire (18) est réalisé comme un vérin hydraulique (23).

4. Hydrolienne modulaire selon l'une des revendications 2 ou 3, dans laquelle l'entraînement linéaire (18) comprend une installation de verrouillage (19) intégrée.

5. Hydrolienne modulaire selon l'une des revendications précédentes, dans laquelle les éléments de déplacement linéaire (15.1..., 15.4) servant à suspendre la première platine de connexion (11) sur l'élément portant (16) sont conformés comme des barres de ressort (21.1, 21.2).

6. Hydrolienne modulaire selon l'une des revendications précédentes, dans laquelle la première platine de connexion (11) est suspendue par au moins trois éléments de déplacement linéaire (15.1..., 15.4) à l'élément portant (16).

7. Hydrolienne modulaire selon l'une des revendications précédentes, dans laquelle le connecteur (5, 5.1..., 5.n) et la prise femelle (6, 6.1..., 6.n) correspondante forment une connexion enfichée électrique ou optique ou hydraulique.

8. Hydrolienne modulaire selon l'une des revendications précédentes, dans laquelle le connecteur (5, 5.1..., 5.n) est relié au moins indirectement à la première platine de connexion (11) ou à la deuxième platine de connexion (12) et la prise femelle (6, 6.1..., 6.n) associée au connecteur (5, 5.1..., 5.n) se trouve sur l'autre platine de connexion (11, 12).

9. Hydrolienne modulaire selon la revendication 8, dans laquelle le connecteur (5, 5.1..., 5.n) et la prise femelle (6, 6.1..., 6.n) correspondante sont fixés de manière rigide sur la platine de connexion (11, 12) correspondante.

10. Hydrolienne modulaire selon la revendication 8, dans laquelle le connecteur (5, 5.1..., 5.n) et/ou la prise femelle (6, 6.1..., 6.n) correspondante sont associés à un actionneur de connecteur (24) séparé qui permet un mouvement relatif vers la platine de connexion (11, 12) correspondante.

11. Hydrolienne modulaire selon la revendication 10, dans laquelle le connecteur (5, 5.1..., 5.n) et/ou la prise femelle (6, 6.1..., 6.n) correspondante forment avec l'actionneur de connecteur (24) séparé un organe de liaison entre un câble sous-marin (25) partant de l'hydrolienne modulaire et un câble de puissance (26) relié à un générateur électrique (31) dans la nacelle de machine.

12. Hydrolienne modulaire selon l'une des revendications précédentes, dans laquelle le dispositif de connexion submergé est intégré dans un dispositif d'accouplement (29) sur la structure de support (1) et entouré par une paroi (27) de l'hydrolienne.

13. Hydrolienne modulaire selon l'une des revendications 1 à 11 avec une turbine hydraulique (3) à circulation bidirectionnelle et une nacelle de machine (2) pouvant être posée sur la structure de support (1) de manière fixe en rotation, dans laquelle le dispositif de connexion submergé est disposé à l'extérieur d'un boîtier (28) de la nacelle de machine (2) et à l'extérieur de la paroi de la structure de support (1).

14. Procédé pour le montage d'une hydrolienne modulaire selon l'une des revendications précédente, comprenant les étapes de :
- pose de la nacelle de machine sur la structure de support (1) ;
- orientation du premier sous-ensemble (9) assemblé avec la nacelle de ^ machine (2) par rapport au deuxième sous-ensemble (10) du dispositif de connexion submergé assemblé à la structure de support (1) ;
- déplacement de l'élément de centrage (13.1, 13.2) vers la pièce de centrage opposée (14.1, 14.2) jusqu'à ce qu'ils se mettent en prise l'un dans l'autre en correspondance de forme et que la première platine de connexion (11) du premier sous-ensemble (9) effectue un mouvement de compensation par rapport à la deuxième platine de connexion (12) du deuxième sous-ensemble (10) et que le connecteur (5, 5.1..., 5.n) et la prise femelle (6, 6.1..., 6.n) correspondante s'alignent.

15. Procédé pour le montage d'une hydrolienne modulaire selon la revendication 14, dans lequel la liaison active entre le connecteur (5, 5.1..., 5.n) et la prise femelle (6, 6.1..., 6.n) correspondante est établie lors de la mise en prise en correspondance de forme de l'élément de centrage (13.1, 13.2) et de la pièce de centrage opposée (14.1, 14.2) l'un dans l'autre.

16. Procédé pour le montage d'une hydrolienne modulaire selon la revendication 14 dans lequel, après l'alignement entre le connecteur (5, 5.1..., 5.n) et la prise femelle (6, 6.1..., 6.n) correspondante, un actionneur de connecteur (24) séparé déplace le connecteur (5, 5.1..., 5.n) et/ou la prise femelle (6, 6.1..., 6.n) correspondante par rapport à la platine de connexion (11, 12) correspondante, de façon à établir une liaison active entre le connecteur (5, 5.1..., 5.n) et la prise femelle (6, 6.1..., 6.n) correspondante.
